# EUROPEAN PATENT APPLICATION

(11) **EP 3 734 817 A1**
(43) Date of publication of application: **04.11.2020**
(21) Application number: 19171548.1
(22) Date of filing: 29.04.2019
(51) Int. Cl.: H02M 1/00, H02M 5/12, H02M 1/15, H02M 7/155, H02M 1/42

(54) **DC POWER SUPPLY AND METHOD FOR PROVIDING CASCADED DC VOLTAGE**

(71) Applicant: ABB Schweiz AG, 5400 Baden (CH)
(72) Inventor: Biskoping, Matthias, 69493 Hirschberg-Leutershausen (DE)

(57) **Abstract**

The invention relates to a DC power supply (100) for providing a cascaded voltage, comprising a first voltage source (105) configured to provide a first controlled DC voltage V_{DC_out_1}; a second voltage source (107) configured to provide an uncontrolled second DC voltage V_{DC_out_2}; and a summation cicuit (108) to sum up the first DC voltage V_{DC_out_1} and the second DC voltage V_{DC_out_2} to obtain the output voltage V_{DC_out} of the DC power supply (100). The first voltage source (105) is further configured to regulate the output voltage V_{DC_out} according to a reference voltage and to compensate fluctuations of the output voltage V_{DC_out}.

## Description

### FIELD OF THE INVENTION

The present invention relates to a DC power supply, a method for providing cascaded DC voltage, a program element, a computer readable medium, and a usage of the DC power supply.

### BACKGROUND

Today, especially electric vehicle chargers need a wide range of output voltages in order to fulfil the need of different specifications. Normally, the whole charging power is delivered through a full power converter.

### SUMMARY

The conventional solutions are expensive and therefore, there may be a desire to reduce the costs and effort to provide an efficient DC power supply.

The problem is solved by the subject-matter of the independent claims. Embodiments are provided by the dependent claims, the following description and the accompanying figures.

The described embodiments similarly pertain to the DC power supply and the method for providing DC power, the computer program element and the computer-readable medium. Synergetic effects may arise from different combinations of the embodiments although they might not be described in detail.

Technical terms are used by their common sense. If a specific meaning is conveyed to certain terms, definitions of terms will be given in the following in the context of which the terms are used.

According to a first aspect, a DC power supply for providing a cascaded voltage is presented, comprising a first voltage source configured to provide a first controlled DC voltage V_{DC_out_1}; and a second voltage source configured to provide an uncontrolled second DC voltage V_{DC_out_2}. The DC power supply further comprises and a summation circuit or any other means to sum up the first DC voltage V_{DC_out_1} and the second DC voltage V_{DC_out_2} to obtain the output voltage V_{DC_out} of the DC power supply. The first voltage source is further configured to regulate the output voltage V_{DC_out} according to a reference voltage and to compensate fluctuations of the output voltage V_{DC_out}. In other words, the invention comprises two voltage sources, wherein only the first DC voltage is regulated. The first DC voltage V_{DC_out_1} may be regulated in a limited range, whereas the main part of the output voltage V_{DC_out} is provided by the second voltage source with an output voltage V_{DC}__{out_2}. Fluctuations, of the summed up output voltage V_{DC_out} as, e.g., a ripple caused by an input voltage, are compensated by the power electronic converter. Instead of using a full power electronic converter, the power electronic converter has to be designed only for a fraction of the output power.

According to an embodiment, the first voltage source is a power electronic converter and the second voltage source is a fixed ratio converter or a passive diode rectifier. Especially by using a passive diode rectifier an economic realization of the DC power supply is obtained.

According to an embodiment, the DC power supply further comprises a tapped transformer, configured to provide a first non-switchable transformer voltage V₁ at a fixed tap and a second switchable transformer voltage V₂ at one of a plurality of taps; and a first rectifier configured to rectify the first non-switchable transformer voltage V₁ in order to obtain a first uncontrolled voltage V_{DC_uc_out_1}.
The first voltage source is connected in series with the first rectifier and configured to regulate the first controlled DC voltage V_{DC_out_1} based on the first uncontrolled voltage V_{DC_uc_out_1}. The second voltage source is configured to rectify the second switchable transformer voltage V₂ in order to obtain the second DC voltage V_{DC_out_2}.

Thus, the provision of the power for the two voltage sources may be realized with a tapped transformer, wherein power for the first DC voltage source is provided by, e.g., a simple rectifier between a fixed tap of the transformer and the DC voltage source.

The first and the second rectifier may therefore have a simple design. The second transformer voltage V₂ passes the second rectifier delivering the uncontrolled rectified grid voltage V_{DC_out_2}, whereas the first transformer voltage V₁ source passes the first rectifier delivering a first uncontrolled voltage V_{DC_uc_out_1}, that is turned into a controlled voltage V_{DC_out_1} by the power electronic converter. Since the power electronic converter controls V_{DC_out_1}, also the sum of both output voltages is precisely 4controlled, thereby compensating the ripple of the uncontrolled sources as, e.g., a ripple created by the second tapped rectifier resulting in a ripple of V_{DC_out_2}. The arrangement of rectifier and converter can be exchanged by any other AC/DC converter and is therefore not restricted to the shown example. Additionally, the needed passive elements for harmonic reduction are not shown for simplicity.

According to an example, in a first mode, the DC power supply is configured to regulate the first uncontrolled voltage in such a way that the output voltage of the DC power supply is constant.

According to an example, in a second mode, the DC power supply is configured to regulate the first uncontrolled voltage in such a way that the output voltage is following a required reference voltage that may vary within the range, the power electronic converter is capable to provide. The required reference voltage in this case may be any voltage curve.

According to an embodiment, in a third mode, the DC power supply is configured to regulate the output voltage V_{DC}_ₒᵤₜ by selecting a tap of the plurality of taps to provide the second switchable transformer voltage V₂ and to control the first DC voltage V_{DC_out_1} in such a way that the output voltage V_{DC_out} is following a required reference voltage in a range between a minimum second DC voltage V_{DC_out_2_min} plus a minimum voltage V_{DC1_min} and a maximum second DC voltage V_{DC_out_2_max} plus a maximum voltage V_{DC1_max}. This case may be applied for voltages that increase over a wide range. In this mode, when switching to a starting tap, say, with a low voltage, the power electronic converter is first providing a minimum DC voltage V_{DC_out_1_min} at its output. The power electronic converter increases the DC voltage V_{DC_out_1} according to a desired reference voltage curve. When reaching the voltage level corresponding to the sum of the voltage at next tap, more precisely, the average output voltage, and the minimum output voltage V_{DC_out_1_min} of the power electronic converter, the next tap is selected. Contemporarily, the power electronic converter is set to its minimum output voltage V_{DC_out_1_min}, which then increases again according to the desired reference voltage curve.

According to an example, the first rectifier and the second rectifier are diode rectifiers so that the first non-switchable transformer voltage and the second switchable transformer voltage are uncontrolled voltages. Diode rectifiers can be implemented in a simple way at low costs. Since the voltage is regulated in the power electronic converter, which also eliminates the ripple on the voltage, diode rectifiers are a preferred choice. However, any AC/DC converter known to the skilled person can be used.

According to an embodiment, the plurality of taps are connected to a first winding of the tapped transformer and the fixed tap is connected to a second winding of the tapped transformer. The first and the second windings form the second side of the transformer. Therefore, only one transformer is necessary to provide the two voltage sources that are input to the first and the second rectifier, respectively. Alternatively, the first and the second voltage sources may be provided by different transformers related to a common potential, as known to a skilled person.

According to a further embodiment, the DC power supply comprises switches, configured to switch to one of the plurality of taps of the tapped transformer to provide the second switchable transformer voltage V₂ resulting in an output voltage V_{DC_out} according to the required reference voltage, i.e., the desired reference voltage curve. The switches may be electro-mechanical switches, as, e.g., relays, or, according to an embodiment, semiconductors. The switches may be controlled by a controller which is described below.

According to an embodiment, the DC power supply further comprises a controller configured to control the output voltage V_{DC_out} according to a reference voltage.

For example, the controller may be associated to the power electronic converter and be responsible for the controlled output voltage V_{DC_out}. The controller may perform measurements of the output voltage V_{DC_out} or collect measurement data and select the tap out of the plurality of taps to obtain the second DC voltage V_{DC_out_2} and may control the first DC voltage V_{DC_out_1} such that the sum of the first DC voltage V_{DC_out_1} and the second DC voltage V_{DC_out_2} results in the desired output voltage V_{DC_out} according to, e.g., a given internally or externally provided reference voltage. The controller may also be responsible for controlling the compensation of the voltage fluctuations. The controller may comprise circuits without programmable logics or may be or comprise a micro controller, a field programmable gate array (FPGA), an ASIC, a Complex Programmable Logic Devices (CPLD), or any other programmable logic devices known to person skilled in the art.

According to an embodiment, the power electronic converter, e.g., more precisely, the controller, is configured to compensate for harmonics contained in the first DC voltage V_{DC_out_1} and/or the second DC voltage V_{DC_out_2}. If the first rectifier is an Active Front End or a Power Factor Correction (PFC), also the harmonics on the transformer input side, caused by the second uncontrolled rectifier, can be compensated.

As rectifier stages deliver harmonic content, the whole installation could also be realized with an own grid for supplying an EV charging area. In this own grid the grid codes do not apply. The power electronic circuit, e.g., a Power Factor Correction (PFC) or an Active Front End as, e.g., an AC/DC converter connected to the first rectifier, could be used to compensate some of the harmonic content of the uncontrolled stage via injecting 180 degree opposite harmonics so that sum of the power electronic harmonics and the uncontrolled rectifier stage vanish on the primary input side of the transformer.

The power electronic converter may be, according to an embodiment, any known topology, e.g. buck, buck-boost, resonant topologies or, without the passive rectifier, directly a Power Factor Correction or Active Front End.

According to an embodiment, the DC power supply further comprises a diode arranged at the summed up voltage, which is configured to provide the voltage V_{DC_out} and to protect DC power supply from back current.

According to an aspect, a method for providing a cascaded DC voltage, comprising the steps:
providing, by a first voltage source a first controlled DC voltage V_{DC_out_1};
providing, by a second voltage source an uncontrolled second DC voltage V_{DC_out_2};
summing up the first DC voltage V_{DC_out_1} and the second DC voltage V_{DC_out_2} to obtain the output voltage V_{DC_out} of the DC power supply; and
regulating, by the first voltage source, the output voltage V_{DC_out} according to a reference voltage and in such a way that fluctuations of the output voltage V_{DC_out} are compensated.

The functionality of the DC power supply therefore comprises:
providing a first non-switchable transformer voltage V₁ at a fixed tap of a tapping transformer;
providing a second switchable transformer voltage V₂ at one of a plurality of further taps of the tapping transformer;
rectifying, by a first rectifier, the first non-switchable transformer voltage V₁ in order to obtain a first uncontrolled voltage V_{DC_uc_out_1};
rectifying, the second switchable transformer voltage V₂ to obtain a second DC voltage V_{DC_out_2};
regulating, by a power electronic converter connected in series with the first rectifier, the first controlled DC voltage V_{DC_out_1} based on the first uncontrolled voltage V_{DC_uc_out_1};
summing up the first DC voltage V_{DC_out_1} and the second DC voltage V_{DC_out_2} to obtain the output voltage V_{DC_out} of the DC power supply; wherein the first uncontrolled voltage V_{DC_out_1} is regulated by the power electronic converter in such a way that the output voltage V_{DC_out} follows a reference voltage and voltage fluctuations of the output voltage V_{DC_out} are compensated.

The step of regulating the first controlled DC voltage V_{DC_out_1} based on the first uncontrolled voltage V_{DC_uc_out_1} may be performed by a controller associated with the power electronic converter, and the controller performs furthermore the following steps: measuring the output voltage; and
selecting and switching the tap out of the plurality of further taps of the transformer.

The controller may have an analog input for measuring the output voltage V_{DC_out}, V_{DC_uc_out_1}, V_{DC_out_1}, V_{DC_out_2}, or may otherwise collect the data of a voltage sensor or a voltage sensor circuit.

According to an example, the step of regulating, by a power electronic converter connected in series with the first rectifier, the first controlled DC voltage V_{DC_out_1} based on the first uncontrolled voltage V_{DC_uc_out_1} comprises further the following steps: when reaching the maximum voltage of the first DC voltage V_{DC_out_1}, selecting a tap of the plurality of taps to provide the second switchable transformer voltage V₂; and controlling the first DC voltage V_{DC_out_1} in such a way that the output voltage V_{DC_out} is following a required reference voltage in a range between a minimum second DC voltage V_{DC_out_2_min} plus a minimum voltage V_{DC_out_1_min} and a maximum second DC voltage V_{DC_out_2_max} plus a maximum voltage V_{DC_out_1_max}.

The regulated output voltage is achieved by a serial-connected voltage source which is delivered through a fast acting power electronic converter. E.g., for EV (electric vehicle) chargers, the charging voltage starts at a certain level and then increases gradually to higher voltages. Hence, the voltage of the start tapping added by the minimum output of the power electronics defines the start charging voltage. When the power electronic converter has reached its maximum output, the tapping of the uncontrolled converter is changed to the next higher level, and the power electronic converter starts again at its minimum output. Through fast control of the power electronics this conversion can be made smooth.

According to an embodiment, a program element is provided, which when being executed by a controller, instructs the DC power supply to perform the steps of the method described above.

The computer program element may be part of a computer program, but it can also be an entire program by itself. For example the computer program element may be used to update an already existing computer program to get to the present invention.

According to an aspect, a computer readable medium is provided on which a program element according to claim 11 is stored.

The computer readable medium may be seen as a storage medium, such as for example, a USB stick, a CD, a DVD, a data storage device, a hard disk, a microcontroller or any other medium on which a program element as described above can be stored.

These and other features, aspects and advantages of the present invention will become better understood with reference to the accompanying figure and the following description.

### SHORT DESCRIPTION OF THE FIGURES

Fig. 1 shows a block diagram of the DC power supply according to an embodiment.
Fig. 2 shows a further block diagram of the DC power supply according to an embodiment.
Fig. 3 shows a time-voltage diagram output voltage curve according to an embodiment.
Fig. 4 shows tapped transformer according to an embodiment.
Fig. 5 shows a realization of the power supply according to an embodiment.
Fig. 6 shows a DC power supply circuit with semiconductor switches according to a further embodiment.
Fig. 7 shows a DC power supply circuit according to a further embodiment.
Fig. 8 shows a DC power supply circuit according to a further embodiment.
Fig. 9 shows a flow diagram of a method for providing DC power according to an embodiment.
Fig. 10 shows a flow diagram of a method for providing DC power according to an example.

### DETAILED DESCRIPTION OF EMBODIMENTS

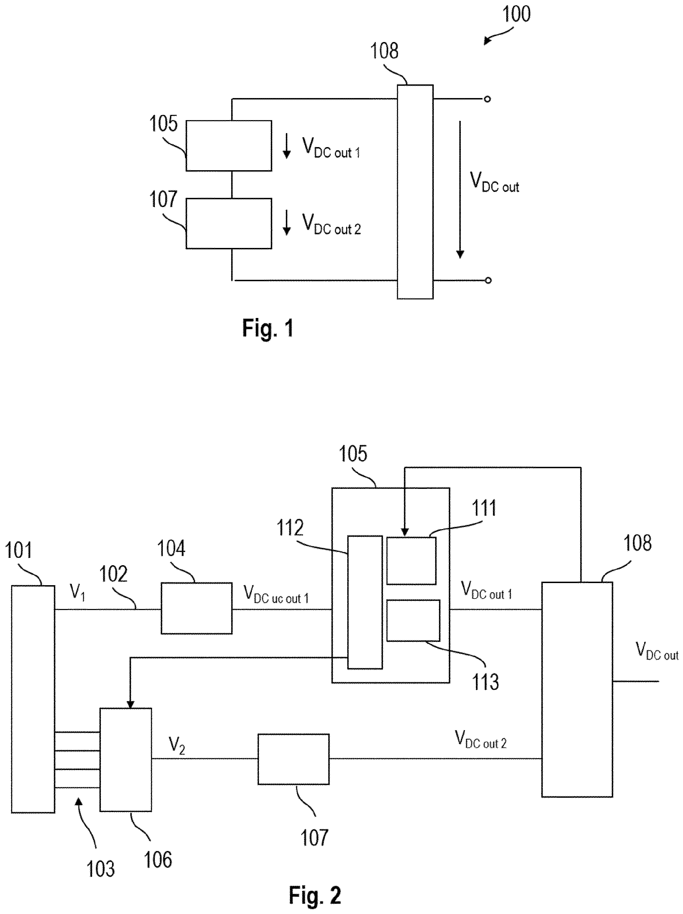

Fig. 1 shows a block diagram of the DC power supply 100 with two voltage sources 105 and 107. The first voltage source 105 provides a controlled voltage V_{DC_out_1}, whereas the voltage source 107 provides an controlled voltage V_{DC_out_2}. summation cicuit 108, which may comprise, for example, one or more capacitors, adds the two voltages V_{DC_out_1} and V_{DC_out_2} so that the smooth output voltage V_{DC_out}, e.g., a constant voltage, is obtained.

Fig. 2 shows a further block diagram of the DC power supply 100 according to an embodiment. A transformer 101 has a fixed tap 102, and separated from this tap 102 a plurality of further taps 103. The voltage at the fixed tap 102 is provided to a rectifier 104, which rectifies the voltage V₁ at its input in order to output an uncontrolled voltage V_{DC_uc_out_1}. The uncontrolled voltage V_{DC_uc_out_1} is input to the power electronic converter 105, which delivers a controlled Voltage V_{DC_out_1}.

On a second path, the voltage at the plurality of further taps 103 is provided to a switching unit 106, where a tap is selected and the voltage at the selected tap is provided to the rectifier 107, which rectifies the voltage V₂ in order to output an uncontrolled voltage V_{DC_out_2}.

The summation circuit 108, or any corresponding means 108, sums up V_{DC_out_1} and V_{DC_out_2}, so that V_{DC_out} is obtained. The power electronic converter 105 comprises a measurement unit 111 to measure one or more voltages, as, e.g., V_{DC_out_1,} V_{DC_uc_out_1} V_{DC_out_2}, or the sum of both, V_{DC_out}, and comprises further a converter unit 113, that provides a controlled voltage V_{DC_out_1} which is compensated for voltage fluctuations, by a feed back from V_{DC_out}, and which is controlled by the controller 112. Controller 112 uses the measurements and a requirement from the load, which is, e.g., provided from the load as a reference voltage. E.g., the voltage V_{DC_out}, is controlled such that a required input current for the load is obtained. The requirement may be as, e.g., in case of an EV battery charging, that the voltage has to be increased gradually over a wide range. In this case, the voltage of V_{DC_out_1} and V_{DC_out_2}, where V_{DC_out_2} is the voltage at a first tap and V_{DC_out_1} is at a minimum of the operation power of the power electronic converter, is increased by increasing gradually V_{DC_out_1}. When the increase corresponds to the voltage difference to the next tap, the next tap is selected by the controller 112 and V_{DC_out_1} is reset to its minimum, so that a continuous transition at the tap switches is achieved.

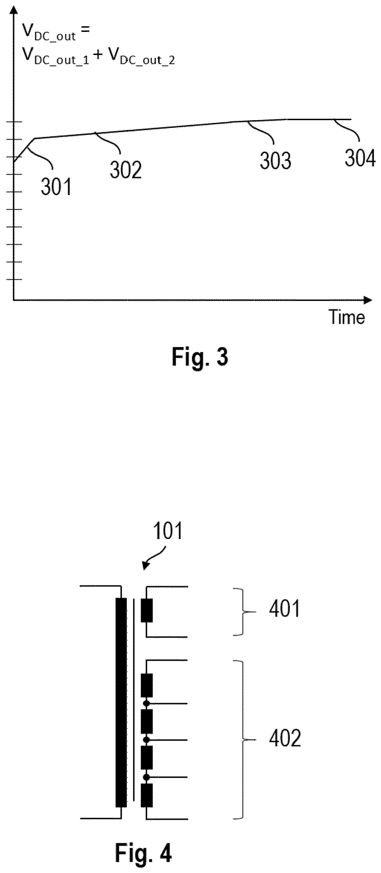

Fig. 3 shows an example of the voltage curve V_{DC_out_1} plus V_{DC_out_2} in a time-voltage-diagram, illustrating the second mode, where the desired reference voltage range remains inside the voltage range of the power electronic converter 105. The voltage increases linearly in each of the sections 301, 302, 303, 304. In section 304 it remains constant.

Fig. 4 shows a tapped transformer 101 with an extra winding 401, which may be used as a fixed tap for providing the first non-switchable transformer voltage V₁, and a second winding 402, which is the main winding and which is tapped by a plurality of taps for providing the second switchable transformer voltage V₂.

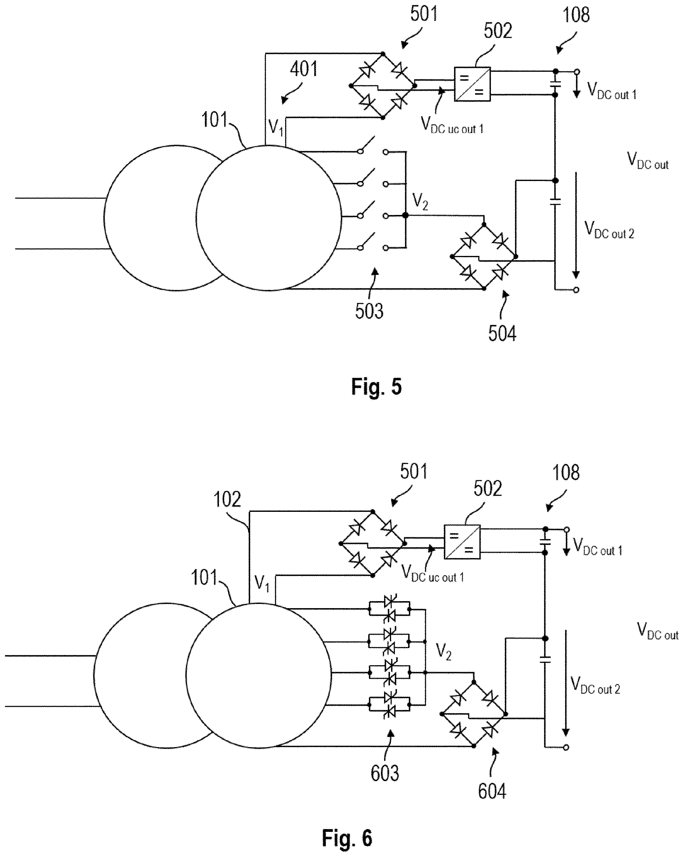

Fig. 5 shows a realization of the power supply 100. The main winding 402 (se also Fig. 4) can be tapped with mechanical switches 503, e.g., relays, and the connected rectifier 504 produces an uncontrolled voltage V_{DC_out_2}. The first output at tap 102 is fixed and delivers through a possible bridge rectifier 501 the voltage V_{DC_uc_out_1} to the power electronic unit 502 which delivers the controlled output voltage V_{DC_out_1}. This voltage can be controlled in a way by the power electronics such that the sum of both voltages (V_{DC_out_1} and V_{DC_out_2}) is, e.g., constant. Hence, the power electronics compensates the voltage ripple of the first stage. The controlled output can also be realized with any other Power Factor Correction (PFC) or AC/DC topology available on the market. It is not restricted to the shown bridge rectifier with the DC/DC converter. The power electronic path has to deliver only a fraction of the total power as the main power is delivered through the main tapped rectifier stage.

Fig. 6 shows an alternative to the mechanical switches 503 shown in Fig. 4, using semiconductor switches 603. Here, the power electronic switches need to be switched according to the grid frequency, which requires higher control effort and measurement equipment but, on the other side, allows fast transitions between the individual levels. The semiconductors can also be used to do some pre-regulation, e.g., with phase-fired control, of the uncontrolled voltage V_{DC_out_2} such that less taps are needed in comparison to the mechanical solution.

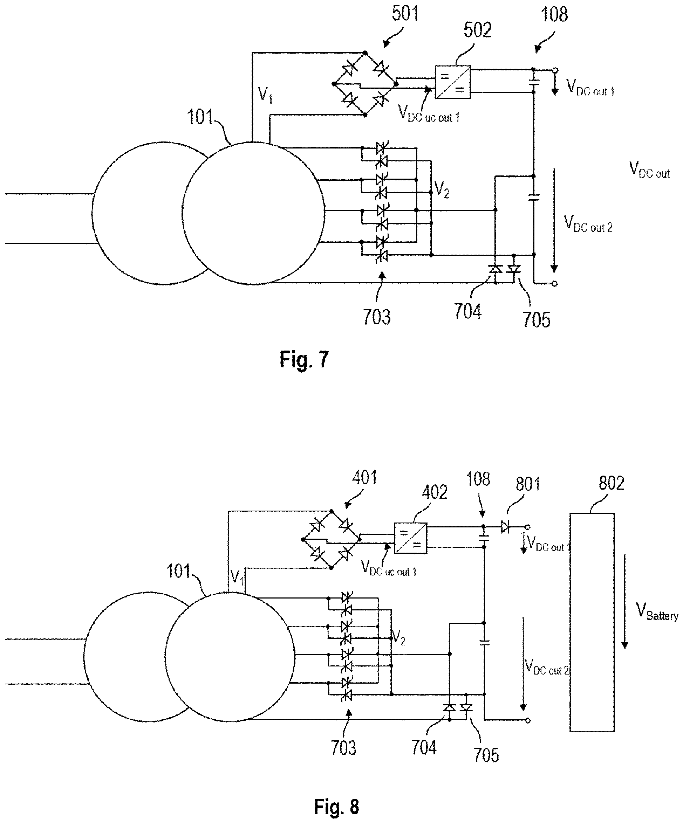

Fig. 7 shows an example of the DC power supply similar to Fig. 6, however, the diode rectifier 603 is integrated to the semiconductor arrangement 703 such that the positive half wave contributes to the voltage V_{DC_out_2} and is blocked by diode 704, and the negative half wave contributes to the voltage V_{DC_out_2} via diode 704 and is blocked by diode 705.

The DC power supply in Fig. 8 comprises exemplarily for all embodiments an additional diode 801 so that a flow back of current from the load to the DC power supply is avoided. Such a flow back may occur, e.g., when changing taps.

The DC power supply 100 is shown and described for a single phase in the Figures and in the disclosure, respectively, but can be extended to three phases or another number of phases.

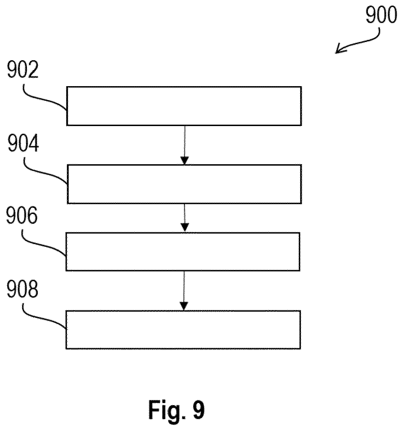

Fig. 9 shows a flow diagram of a method 900 for providing a cascaded DC voltage according to an embodiment, comprising the steps:
providing 902, by a first voltage source 105, a first controlled DC voltage V_{DC_out_1};
providing 904, by a second voltage source 107, an uncontrolled second DC voltage V_{DC_out_2};
summing up 906 the first DC voltage V_{DC_out_1} and the second DC voltage V_{DC_out_2} to obtain the output voltage V_{DC_out} of the DC power supply 100; and
regulating 908, by the first voltage source 105 the output voltage V_{DC_out} according to a reference voltage and to compensate fluctuations of the output voltage V_{DC_out}.

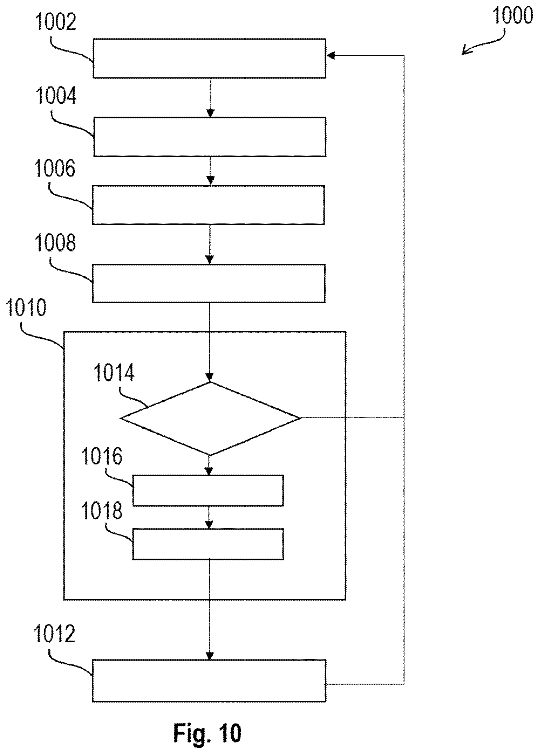

Fig. 10 shows a further flow diagram of a method (1000) for providing a cascaded DC voltage in the third mode. The method comprises the steps:
Providing (1002) a first non-switchable transformer voltage V₁ at a fixed tap (102) of a tapping transformer;
providing (1004) a second switchable transformer voltage V₂ at one of a plurality of further taps (103) of the tapping transformer;
rectifying (1006), by a first rectifier (104), the first non-switchable transformer voltage V₂ in order to obtain a first uncontrolled voltage V_{DC_uc_out_1};
rectifying (1008), the second switchable transformer voltage V₂ to obtain a second DC voltage V_{DC_out_2};
regulating (1010), by a power electronic converter connected in series with the first rectifier, the first controlled DC voltage V_{DC_out_1} based on the first uncontrolled voltage V_{DC_uc_out_1};
summing up (1012) the first DC voltage V_{DC_out_1} and the second DC voltage V_{DC_out_2} to obtain the output voltage V_{DC_out} of the DC power supply; wherein the first DC voltage V_{DC_out_1} is regulated, by the power electronic converter, in such a way that the output voltage V_{DC_out} follows a reference voltage and voltage fluctuations of the output voltage V_{DC_out} are compensated.

The step of regulating (1010), by a power electronic converter (105) connected in series with the first rectifier (104), the first controlled DC voltage V_{DC_out_1} based on the first uncontrolled voltage V_{DC_uc_out_1}., comprises further the following steps:
when reaching the maximum voltage of the first DC voltage V_{DC_out_1} (1014),
selecting (1016) a tap of the plurality of taps (402) to provide the second switchable transformer voltage V₂; and
controlling (1018) the first DC voltage V_{DC_out_1}, in such a way that the output voltage V_{DC_out} is following a required reference voltage in a range between a minimum second DC voltage V_{DC_out_2_min} plus a minimum voltage V_{DC_out_1_min} and a maximum second DC voltage V_{DC_out_2_max} plus a maximum voltage V_{DC_out_1_max}.

For example, the reference voltage is an increasing voltage so that the regulating of the regulated first voltage comprises increasing the regulated first voltage, starting from a minimum voltage, and the method comprises further the following steps:
when reaching the maximum voltage of the voltage range (1014), selecting (1016) a tap corresponding to an adjacent higher-level output voltage range; switching to a higher-level uncontrolled second voltage corresponding to the adjacent higher-level output voltage range, provided by a second selectable transformer tap; resetting the regulated first voltage to the minimum voltage; and increasing again (1010) the regulated first voltage.

Other variations to the disclosed embodiments can be understood and effected by those skilled in the art in practicing the claimed invention, from the study of the drawings, the disclosure, and the appended claims. In the claims the word "comprising" does not exclude other elements or steps and the indefinite article "a" or "an" does not exclude a plurality. A single processor or other unit may fulfill the functions of several items or steps recited in the claims. The mere fact that certain measures are recited in mutually different dependent claims does not indicate that a combination of these measures cannot be used to advantage. A computer program may be stored/distributed on a suitable medium such as an optical storage medium or a solid-state medium supplied together with or as part of other hardware, but may also be distributed in other forms, such as via the Internet or other wired or wireless telecommunication systems. Any reference signs in the claims should not be construed as limiting the scope of the claims.

## Claims

1. DC power supply (100) for providing a cascaded voltage, comprising
a first voltage source (105) configured to provide first controlled DC voltage V_{DC_out_1};
a second voltage source (107) configured to provide an uncontrolled second DC voltage V_{DC_out_2}; and
a summation cicuit (108) to sum up the first DC voltage V_{DC_out_1} and the second DC voltage V_{DC_out_2} to obtain the output voltage V_{DC_out} of the DC power supply (100); wherein
the first voltage source (105) is further configured to regulate the output voltage V_{DC_out} according to a reference voltage and to compensate fluctuations of the output voltage V_{DC_out}.

2. DC power supply (100) according to claim 1, wherein the first voltage source is a power electronic converter and the second voltage source is a fixed ratio converter or a passive diode rectifier.

3. DC power supply (100) according to claim 1 or 2, further comprising
a tapped transformer (101), configured to provide a first non-switchable transformer voltage V₁ at a fixed tap (102) and a second switchable transformer voltage V₂ at one of a plurality of taps (103); and
a first rectifier (104) configured to rectify the first non-switchable transformer voltage V₁ in order to obtain a first uncontrolled voltage V_{DC_uc_out_1}; wherein
the first voltage source (105) is connected in series with the first voltage source and the first voltage source (105) is configured to regulate the first uncontrolled voltage V_{DC_uc_out_1} in order to obtain the first controlled DC voltage V_{DC_out_1};
and wherein
the second voltage source is configured to rectify the second switchable transformer voltage V₂ in order to obtain the second DC voltage V_{DC_out_2}.

4. DC power supply (100) according to claim 1 or 2, wherein the DC power supply is configured to regulate the output voltage V_{DC_out} by selecting a tap of the plurality of taps (103) to provide the second switchable transformer voltage V₂ and to control the first DC voltage V_{DC_out_1} in such a way that the output voltage V_{DC_out} is following a required reference voltage in a range between a minimum second DC voltage V_{DC_out_2_min} plus a minimum voltage V_{DC_out_1_min} and a maximum second DC voltage V_{DC_out_2_max} plus a maximum voltage V_{DC_out_1_max}.

5. DC power supply (100) according to one of claims 3 or 4, wherein the plurality of taps are connected to a first winding (401) of the tapped transformer (101) and the fixed tap is connected to a second winding (402) of the tapped transformer (101).

6. DC power supply (100) according to one of the claims 3 to 5, wherein the DC power supply (100) comprises switches (106), configured to switch to one of the plurality of taps of the tapped transformer (101) to provide the second switchable transformer voltage V₂ resulting in an output voltage V_{DC_out} according to the required reference voltage.

7. DC power supply (100) according to claim 5, wherein the switches (106) are semiconductors.

8. DC power supply (100) according to one of the preceding claims, further comprising a controller configured to control the output voltage V_{DC_out} according to a reference voltage.

9. DC power supply (100) according to one of the preceding claims, wherein the power electronic converter (105) is configured to compensate for harmonics contained in the first DC voltage V_{DC_out_1} and/or the second DC voltage V_{DC_out_2}, and /or the transformer input side.

10. DC power supply (100) according to one of the preceding claims, wherein the first voltage source (105) is of one of the following types of topologies: buck, buck-boost, or resonant topologies.

11. DC power supply (100) according to one of the preceding claims, further comprising a diode (701) arranged at the summed up voltage, configured to provide the voltage V_{DC_out} and to protect DC power supply (100) from back current.

12. Method for providing a cascaded DC voltage, comprising the steps:
providing, by a first voltage source (105), a first controlled DC voltage V_{DC_out_1};
providing, by a second voltage source (107), an uncontrolled second DC voltage V_{DC_out_2};
summing up the first DC voltage V_{DC_out_1} and the second DC voltage V_{DC_out_2} to obtain the output voltage V_{DC_out} of the DC power supply (100); and
regulating, by the first voltage source (105), the output voltage V_{DC_out} according to a reference voltage and in such a way that fluctuations of the output voltage V_{DC_out} are compensated.

13. Use of the DC power supply (100) according to one of claims 1 to 7 for charging a battery of a vehicle.

14. Program element, which when being executed by a controller (112), instructs the DC power supply (100) to perform the steps (902 to 916) of claim 8 or 9.

15. Computer readable medium on which a program element according to claim 11 is stored.
